# EUROPEAN PATENT APPLICATION

(11) **EP 4 775 602 A1**
(43) Date of publication of application: **15.07.2026**
(21) Application number: 25151765.2
(22) Date of filing: 14.01.2025
(51) Int. Cl.: C08F 2/48, C08F 2/50, C08F 220/18, C08F 220/56

(54) **DEEP EUTECTIC INKS FOR MULTI-PHOTON 3D LASER PRINTING**

(71) Applicant: Universität Heidelberg, 69117 Heidelberg (DE)
(72) Inventor: Blasco Pomar, Eva, 69221 Dossenheim (DE); Mainik, Philipp, 69120 Heidelberg (DE); Spiegel, Christoph Alexander, 69120 Heidelberg (DE)
(74) Representative: Müller-Boré & Partner Patentanwälte PartG mbB

(57) **Abstract**

The present invention relates to a method of producing a three-dimensional structure, the method comprising the following steps: A) providing a photopolymerizable composition comprising a photopolymerizable monomer, a Lewis acid, a photoinitiator, and an optional additive; and B) printing the three-dimensional structure by means of multi-photon polymerization of the photopolymerizable composition provided in step A).

## Description

The present invention relates to a method of producing a three-dimensional structure.

In recent years, the advancement of three-dimensional (3D) printing technologies has transformed numerous fields, enabling the fabrication of intricate structures with unprecedented precision and versatility. Among these methods, photopolymerization-based 3D printing has gained significant attraction due to its ability to rapidly produce high-resolution and mechanically robust materials through light-induced curing processes. Photopolymerizable systems have expanded the capabilities of traditional manufacturing by allowing for the creation of complex geometries, previously unattainable with conventional techniques, and they are widely utilized across industries such as biomedical engineering, electronics, and aerospace.

The exploration of photopolymerization in 3D printing has also paralleled a growing emphasis on sustainability and environmental considerations in material science. Traditionally, organic solvents are used in polymerization, but their volatility and environmental impact have spurred the search for eco-friendly solutions. Deep eutectic solvents (DESs) and polymerizable eutectic (PE) mixtures represent a promising direction, combining functional monomer components that act both as a solvent and as a reactant, thus obviating the need for harmful solvents. This approach not only minimizes the environmental footprint but also offers enhanced material properties, such as improved mechanical strength, viscosity control, and increased printing resolution, positioning PE-based systems as a versatile foundation for sustainable 3D printing.

The use of PE mixtures in photopolymerization offers additional benefits, such as faster curing times and tuneable physical properties. By systematically adjusting the composition of the PE mixtures, properties like functional group reactivity and viscosity can be precisely controlled, which enhances the material's adaptability to specific applications. The inherent hydrogen bonding present in PE mixtures further enhances material strength, making these suitable for solvent-free 3D printing processes (G. Zhu, J. Zhang, J. Huang, X. Yu, J. Cheng, Q. Shang, Y. Hu, C. Liu, M. Zhang, L. Hu, Y. Zhou, Self-Healing, Antibacterial, and 3D-Printable Polymerizable Deep Eutectic Solvents Derived from Tannic Acid, ACS Sustainable Chem. Eng. 2022, 10, 7954; A. L. Mutch, Y. Nahar, A. C. Bissember, N. Corrigan, C. Boyer, X. Y. Oh, V. X. Truong, S. C. Thickett, "Dissolve-on-Demand" 3D Printed Materials: Polymerizable Eutectics for Generating High Modulus, Thermoresponsive and Photoswitchable Eutectogels, Macromol. Rapid Commun. 2024, 2400268).

Despite the remarkable advancements in 3D printing through one-photon photopolymerization, there are still several critical challenges that must be addressed to fully realize the potential of 3D printing with high resolution using multi-photon 3D laser printing. One primary issue involves achieving both high resolution and mechanical strength in printed materials without relying on multi-functional photopolymerizable monomers, which are commonly used to enhance material processing and curing.

Another challenge lies in controlling the polymerization kinetics and rheological properties of photopolymerizable resins, which can significantly affect the quality and speed of the printing process. For instance, achieving consistent curing and sufficient crosslinking density throughout the printed structure is essential to avoid weak points, warping, or incomplete curing-issues that are especially problematic in applications requiring precise geometries or mechanical integrity. High viscosity in eutectic systems, while disadvantageous for certain applications, can improve processing via multi-photon 3D laser printing, highlighting the need for optimized formulations that balance viscosity with printability and resolution (T. Zandrini, N. Liaros, L. J. Jiang, Y. F. Lu, J. T. Fourkas, R. Osellame, T. Baldacchini, Effect of the resin viscosity on the writing properties of two-photon polymerization, Opt. Mater. Express 2019, 9, 2601).

Furthermore, while polymerizable eutectic mixtures and deep eutectic solvents offer a sustainable alternative to traditional solvents, their integration into complex 3D printing applications is still an evolving area. Current research primarily focuses on developing new photopolymerizable inks allowing the fabrication of complex, functionalized, and multi-material structures that meet the demands of industries such as biomedicine, flexible electronics, and structural components in automotive and aerospace engineering.

Accordingly, there exists still a need for novel approaches which shall overcome the drawbacks of the techniques reported in the art when printing three-dimensional structures.

The above technical problem underlying the present invention has been solved by providing the subject matter set out in the appended claims.

That is, the present invention provides a method of producing a three-dimensional structure, the method comprising the following steps:
A) providing a photopolymerizable composition comprising a photopolymerizable monomer, a Lewis acid, a photoinitiator, and an optional additive; and
B) printing the three-dimensional structure by means of multi-photon polymerization of the photopolymerizable composition provided in step A).

Advantageously, the present invention allows to print three-dimensional structures with a resolution in the (sub-)micrometer range. This unexpectedly high resolution is achieved due to the unique properties of the photopolymerizable composition in combination with multi-photon polymerization, which enables a spatially controlled curing within the structure to be printed, minimizing excess polymerization and ensuring precise feature shaping. The term "(sub-)micrometer range" refers to features having a size in the range from 0.5 to 999 µm. In this context, a feature refers to any distinct structural element or detail in the printed three-dimensional structure. This includes edges, ridges, grooves, channels, or any other specific parts of the shape that can be distinguished from one another.

The photopolymerizable composition also demonstrates enhanced mechanical stability in the printed three-dimensional structure due to the interactions facilitated by the photopolymerizable composition. These interactions contribute to improved structural integrity and reduce the need for additional chemical crosslinkers, further simplifying the composition and potentially lowering production costs. Moreover, the inclusion of a Lewis acid in the ink formulation promotes efficient polymerization, accelerating the curing process and reducing the overall printing time. Another significant advantage lies in the environmental aspect of the photopolymerizable composition. Unlike traditional photopolymerizable compositions that often rely on volatile organic solvents, the photopolymerizable composition provided herein can operate in a solvent-free or low-solvent environment, thereby reducing harmful emissions and aligning with sustainable manufacturing practices. Furthermore, the photopolymerizable composition provides tunability in viscosity and polymerization kinetics, making it adaptable for various applications and allowing for customization of the printed material's mechanical and thermal properties to suit specific use cases. Surprisingly, the present inventors have found that the photopolymerizable composition is particularly well-suited for multi-photon 3D laser printing, enabling the production of stable, finely detailed structures.

In the following, the production method according to the present invention will be described in detail.

As mentioned above, the production method according to the present invention comprises the step of providing a photopolymerizable composition comprising a photopolymerizable monomer, a Lewis acid, a photoinitiator, and an optional additive, also referred to as step A). The photopolymerizable composition shows a melting point depression which occurs due to interactions between its components, allowing it to remain in a liquid state under room temperature, defined herein as a temperature of 25 °C. As such, the photopolymerizable composition constitutes a deep eutectic ink.

Further to what has been mentioned above, the photopolymerizable composition provided in step A) can operate in a solvent-free or low-solvent environment. The absence of solvents in the photopolymerizable composition offers several advantageous effects, including improved environmental sustainability by eliminating volatile organic compounds (VOCs) and reducing emissions. Additionally, a solvent-free formulation enhances the stability of the polymerization process by preventing phase separation, thus enabling precise control over the polymer network formation. This leads to higher resolution in multi-photon polymerization and increased mechanical stability in the resulting three-dimensional structure, making the process both efficient and environmentally friendly. Accordingly, in a preferred embodiment, the photopolymerizable composition provided in step A) does not include any solvent.

Nevertheless, as required, the photopolymerizable composition provided in step A) may contain one or more solvents to adjust the viscosity as well as other rheological properties. Examples of suitable solvents include ethanol, methanol, isopropanol, acetonitrile, dimethyl sulfoxide (DMSO), tetrahydrofuran (THF), acetone, ethyl acetate, and propylene glycol, without being limited thereto. Further, eutectic solvents such as choline chloride : ethylene glycol mixtures may be suitably used. However, and for the reasons outlined above, the content of these solvents is typically minimized in order to maintain the benefits of a solvent-free composition, such as enhanced environmental sustainability, reduced emissions, and improved stability during polymerization. For example, the total solvent content in the photopolymerizable composition is 50% by mass or less, e.g. 25% by mass or less or 10% by mass or less, based on the entire mass of the photopolymerizable composition.

Preferably, the photopolymerizable composition is water-free, which means that it does not include water. As found by the inventors, water inhibits the multi-photon polymerization process. Here, "not including water" and "water-free" refers to a typical water content of less than 2000 ppm by mass, preferably less than 1000 ppm by mass, more preferably less than 500 ppm by mass, even more preferably less than 250 ppm by mass and particularly preferably less than 100 ppm by mass, based on the entire mass of the photopolymerizable composition. Being water-free, the photopolymerizable composition ensures optimal conditions for multi-photon polymerization, enabling precise, high-resolution structuring and efficient polymerization.

The exclusion of water from the photopolymerizable composition is preferred since water is expected to bind to the Lewis acid, thereby reducing the effect of Lewis acid coordination to the photopolymerizable monomer, directly affecting both the efficiency and the quality of the printing process. In multi-photon polymerization, usually high-intensity lasers initiate polymerization reactions within the photopolymerizable composition by exciting photoinitiator molecules. However, depending on the wavelength for multi-photon polymerization in step B), water molecules may absorb some of this laser energy, reducing the amount of energy available to initiate and sustain the necessary polymerization reactions. This can result in an incomplete or inconsistent polymerization process, which compromises both the resolution and the mechanical stability of the printed three-dimensional structure. Moreover, the presence of water can trigger unwanted side reactions, leading to the formation of byproducts that hinder the precision of the multi-photon polymerization process. These byproducts may produce scattering effects within the photopolymerizable composition, further impairing the laser's ability to precisely target specific regions. A high water content can also promote undesired diffusion within the photopolymerizable composition, causing a loss of fine detail and making it difficult to achieve the formation of structures with a resolution in the (sub-)micrometer range. The aforementioned issues hardly occur in one-photon systems where it is not possible for the water to considerably disrupt the polymerization process since the irradiation times per volume are significantly higher. That is, the polymerization process in one-photon systems is largely unaffected by the presence of water.

In principle, the water content in the photopolymerizable composition provided in step A) may be determined using coulometric Karl Fischer titration. In this method, iodine is generated electrochemically within a titration cell. The amount of iodine generated is proportional to the amount of water present in the sample. As the water reacts with the iodine, an electrical current is applied to continuously generate the iodine until all water has reacted. The endpoint is detected when an increase in cell current indicates the absence of remaining water. This allows for a highly precise measurement, as the total amount of electricity consumed to generate the iodine is proportional to the amount of water present in the sample. However, herein, the water content in the photopolymerizable composition provided in step A) is typically determined by means of standard ¹H-NMR spectroscopy.

The photopolymerizable monomer contained in the photopolymerizable composition provided in step A) is not particularly limited as long as it is suitable for multi-photon polymerization. Without limitation, suitable monomers include (meth)acrylic acid, 2-hydroxyethyl acrylate, 2-hydroxyethyl methacrylate, acrylamide, methacrylamide, N,N-dimethylacrylamide, N-isopropylacrylamide, N-vinylpyrrolidone, styrene, vinyl acetate, glycidyl methacrylate, butyl acrylate, ethyl acrylate, and 2-ethylhexyl acrylate. The photopolymerizable composition provided in step A) preferably contains at least one monomer selected from the group consisting of acrylic acid, 2-hydroxyethyl acrylate, acrylamide, N,N-dimethylacrylamide, N-isopropylacrylamide, and N,N'-bis(acryloyl)cystamine. These monomers offer high reactivity and compatibility with the multi-photon polymerization process, allowing for fine control over the polymer network formation. The resulting structure benefits from enhanced mechanical strength, chemical stability, and precise feature resolution, making it suitable for applications requiring robust and detailed three-dimensional printing. One photopolymerizable monomer can be used alone or in a mixture with other types of photopolymerizable monomers. Photopolymerizable monomers such as N-isopropylacrylamide and acrylamide, which may be less compatible with the Lewis acid alone on a molecular level, can thus be incorporated more effectively into the deep eutectic ink. Mixtures of photopolymerizable monomers enable the preparation of deep eutectic inks suitable for printing complex three-dimensional structures with high precision.

Further, the Lewis acid contained in the photopolymerizable composition provided in step A) is not particularly limited as long as it is compatible with the other components of the composition, particularly with the photopolymerizable monomer. Specifically, the Lewis acid is preferably capable of coordinating to heteroatoms of the photopolymerizable monomer, thereby enhancing the reactivity of the composition. Further, said coordination preferably results in a reduction of the melting point of the photopolymerizable composition, yielding a polymerizable eutectic mixture, the melting point of which is close to or below room temperature. This reduction in melting point facilitates easier handling and processing of the photopolymerizable composition, which in turn supports efficient multi-photon polymerization at ambient conditions.

Classes of Lewis acids to be mentioned for the photopolymerizable composition provided in step A) include metal chlorides, metal bromides, metal oxides, fluorides, organic Lewis acids, borates, silicon-based acids, and other transition metal compounds. For example, metal chlorides may include ZnCl₂, FeCl₃, AlCl₃, MgCl₂, SnCl₄, TiCl₄, VCl₃, GaCl₃, and SbCl₃, metal bromides may include ZnBr₂, FeBr₂, AlBr₃, and SnBr₄, metal oxides may include Al₂O₃ and TiO₂, and fluorides may include BFs. For example, organic Lewis acids may include trifluoromethanesulfonic acid, trifluoroacetic acid, and boron trifluoride diethyl etherate, borates may include B(OH)₃, BCl₃, and BBrs, silicon-based acids may include SiCl₄ and hexafluorosilicic acid (H₂SiF₆), and other transition metal compounds may include MoCls, WCl₆, and CrCl₃. Preferably, the Lewis acid is at least one selected from the group consisting of ZnCl₂, FeCl₃, and AlCl₃. The inclusion of these Lewis acids promotes efficient reactivity in the photopolymerization process, facilitating rapid multi-photon polymerization. This enhances the resolution and mechanical stability of the resulting three-dimensional structure, optimizing it for various applications requiring high precision and durability. Through the coordination with heteroatoms that may be present in the photopolymerizable monomer, these Lewis acids contribute to the reduction in the monomer's melting point, forming a deep eutectic mixture. This lower melting point enhances the flow and handling properties of the photopolymerizable composition, allowing the photopolymerization to occur under mild conditions and supporting a stable, high-resolution printing process even at room temperature.

The molar ratio of the Lewis acid and the photopolymerizable monomer in the photopolymerizable composition provided in step A), represented as molar amount of the Lewis acid : molar amount of the photopolymerizable monomer, may be 1 : 0.5 to 10, preferably 1 : 0.75 to 5, and more preferably 1 : 1 to 2.5. Such molar ratio ensures optimal interaction between the Lewis acid and the photopolymerizable monomer, allowing for efficient coordination with the monomer's heteroatoms. This coordination in turn lowers the activation energy for polymerization, thereby enhancing the reactivity and promoting a more controlled polymerization process. Additionally, such molar ratio facilitates the formation of a deep eutectic mixture, which can reduce the melting point of the photopolymerizable composition, improving handling and processing properties. Maintaining such molar ratio also helps to achieve a uniform polymer network, resulting in enhanced mechanical stability and higher resolution in multi-photon polymerization.

Additionally, such molar ratio allows for tuning of the viscosity of the photopolymerizable composition. Specifically, increasing the proportion of the photopolymerizable monomer relative to the Lewis acid results in a lower viscosity, making the photopolymerizable composition easier to handle and process in applications requiring high flowability. This tunable viscosity is advantageous for multi-photon polymerization, as it enables better control over the material's printability, layer precision, and final structural stability.

The photoinitiator contained in the photopolymerizable composition provided in step A) is not particularly limited, either, provided that it can initiate multi-photon polymerization of the photopolymerizable monomer. Different classes of radical starters are suitable as the photoinitiator, including acylphosphine oxides, benzoylphosphinates, hydroxyalkyl ketones, and amino-substituted benzophenones, each chosen based on their ability to generate free radicals upon light activation.

For example, acylphosphine oxides may include phenylbis(2,4,6-trimethylbenzoyl)phosphine oxide (Ir-819) and diphenyl(2,4,6-trimethylbenzoyl)phosphine oxide (TPO). Benzoylphosphinates may include ethyl phenyl(2,4,6-trimethylbenzoyl)phosphinate (TPO-L). Hydroxyalkyl ketones may include 2-hydroxy-2-methylpropiophenone (Ir-1173) and 1-hydroxycyclohexyl phenyl ketone (Ir-184). Amino-substituted benzophenones may include 4,4'-bis(diethylamino)benzophenone, commonly known as Michler's ethyl ketone. Preferably, the photoinitiator is at least one selected from the group consisting of phenylbis(2,4,6-trimethylbenzoyl)phosphine oxide, diphenyl(2,4,6-trimethylbenzoyl)phosphine oxide, ethyl phenyl(2,4,6-trimethylbenzoyl)phosphinate, 2-hydroxy-2-methylpropiophenone, 1-hydroxycyclohexyl phenyl ketone, and 4,4'-bis(diethylamino)benzophenone. These photoinitiators allow for efficiently generating free radicals upon exposure to light of specific wavelengths used in multi-photon polymerization. This radical generation initiates rapid polymerization of the photopolymerizable monomer, achieving precise, high-resolution structuring. Consequently, the inclusion of these photoinitiators enhances the efficiency of the photopolymerization process and contributes to the mechanical stability of the resulting three-dimensional structure, by allowing for complete conversion of the photopolymerizable monomer upon activation.

The molar ratio of the Lewis acid and the photoinitiator of the photopolymerizable composition provided in step A), represented as molar amount of the Lewis acid : molar amount of the photoinitiator, may be 1 : 0.001 to 0.2, preferably 1 : 0.01 to 0.15, and more preferably 1 : 0.02 to 0.07. Such molar ratio allows for a balanced interaction among the components. The photoinitiator present at such molar ratio further ensures that sufficient free radicals are generated upon light exposure, supporting efficient and uniform polymerization and complete conversion of the photopolymerizable monomer.

Further, the photopolymerizable composition provided in step A) optionally comprises an additive. Typically, the additive is at least one selected from the group consisting of a crosslinker, a plasticizer, a stabilizer, a colorant, a photosensitizer, an antioxidant, a chain transfer agent, a viscosity modifier, and a dispersing agent. For example, crosslinkers such as polyethylene glycol diacrylate (PEGDA), polybutylene glycol diacrylate (PBGDA), trimethylolpropane triacrylate (TMPTA), pentaerythritol tetraacrylate (PETA), bisphenol A ethoxylate diacrylate, ethylene glycol dimethacrylate (EGDMA), or pentaerythritol triacrylate (PETA) increase the rigidity and strength of the resulting structure. Plasticizers, like dibutyl phthalate or polyethylene glycol (PEG), can improve flexibility or impact resistance. Stabilizers, such as UV stabilizers, help to maintain the integrity of the photopolymerizable composition under light exposure, and antioxidants like butylated hydroxytoluene (BHT) prevent oxidation. Photosensitizers enhance the efficiency of the photoinitiation process, allowing for better control of polymerization. Chain transfer agents, including thiols, regulate polymer chain length, which impacts mechanical properties, while viscosity modifiers like fumed silica improve the handling and printability of the photopolymerizable composition. Dispersing agents ensure even distribution of particles or other additives within the composition, and colorants can provide the three-dimensional structure with the desired hue. The inclusion of these additives allows the photopolymerizable composition to be precisely tailored to achieve specific characteristics in the final three-dimensional structure. For instance, crosslinkers enhance rigidness, plasticizers increase flexibility, and photosensitizers further improve multi-photon polymerization efficiency, ensuring high-resolution structuring.

In case a crosslinker is present in the photopolymerizable composition, its content is preferably in the range from 0.5 to 10% by mass, more preferably in the range from 1 to 7% by mass, and even more preferably in the range from 1.5 to 5% by mass, based on the entire mass of the photopolymerizable composition. Such content of the crosslinker provides a balance between flexibility and rigidness.

By definition, a crosslinker has two or more polymerizable groups (double bonds) while the polymerizable monomer described above has only one polymerizable group (double bond).

Regarding the provision of the photopolymerizable composition in step A), the present invention is not particularly limited. Suitably, for providing the photopolymerizable composition, step A) may comprise the following steps:
A1) mixing the photopolymerizable monomer with the Lewis acid and heating the obtained mixture; and
A2) adding the photoinitiator and the optional additive.

In step A1), the photopolymerizable monomer is mixed with the Lewis acid, and the obtained mixture is heated. This heating is performed to promote coordination between the Lewis acid and the photopolymerizable monomer, allowing the Lewis acid to interact with the heteroatoms present in the monomer. This coordination may reduce the melting point of the mixture, leading to the formation of a deep eutectic mixture. The formation of a deep eutectic mixture results in a photopolymerizable composition with improved flow and handling properties, as the lowered melting point facilitates easier processing and application in subsequent steps. As a result, the mixture's stability is enhanced and high-precision multi-photon polymerization is enabled.

Heating in step A1) may be carried out at a temperature in the range from 50 to 150 °C for a period in the range from 5 to 300 min, preferably at a temperature in the range from 70 to 120 °C for a period in the range from 10 to 120 min, and more preferably at a temperature in the range from 80 to 100 °C for a period in the range from 15 to 60 min. These specific heating conditions are selected to promote optimal coordination between the Lewis acid and the photopolymerizable monomer, facilitating the formation of a deep eutectic mixture. Heating under such conditions ensures that the photopolymerizable monomer and the Lewis acid achieve sufficient interaction to lower the melting point effectively without thermally degrading any of the components. This controlled heating process results in a stable, low-viscosity composition, enhancing flow properties and ease of handling for subsequent processing steps and ensuring a composition well-suited for high-precision multi-photon polymerization.

In step A2), the photoinitiator and the optional additive are added subsequently, i.e. after the initial coordination and formation of the deep eutectic mixture in step A1). Adding these components in sequence, rather than mixing them simultaneously, is advantageous because it allows the Lewis acid and the photopolymerizable monomer to first establish optimal coordination. This coordination effectively lowers the melting point and creates a stable deep eutectic mixture, resulting in a photopolymerizable composition with improved flow and handling characteristics. By adding the photoinitiator and the optional additive only after this initial mixture has been formed, their activity is preserved, preventing premature reactions or interactions that could interfere with the formation of the deep eutectic mixture. This sequential addition enhances the overall stability and reactivity of the photopolymerizable composition, ensuring efficient photoinitiation and allowing precise control over the polymerization process, leading to high-resolution structuring in multi-photon polymerization applications.

Once step A) is completed, the production method according to the present invention comprises the step of printing the three-dimensional structure by means of multi-photon polymerization of the photopolymerizable composition provided in step A), also referred to as step B). Without being limited thereto, in step B), the wavelength for multi-photon polymerization may be in the range from 400 to 1200 nm, preferably in the range from 600 to 1000 nm, and more preferably in the range from 700 to 900 nm. Such wavelengths are ideally suited for activating photoinitiators specifically designed for multi-photon processes, allowing efficient absorption of light and initiation of the polymerization reaction. In particular, using light having longer wavelengths within the range from 700 to 900 nm minimizes scattering and absorption by the material itself, allowing deeper penetration of the light into the photopolymerizable composition. This depth control is advantageous for creating high-resolution structures with complex geometries. The selection of photoinitiators optimized for these wavelengths is critical, as they ensure that photopolymerization occurs only within the targeted focal volume. This spatial confinement leads to precise structuring, reducing unintended polymerization outside the focal area. Additionally, photoinitiators responsive to the above wavelengths contribute to faster curing speeds and efficient polymerization, resulting in mechanically robust and finely detailed three-dimensional structures suited for applications requiring high stability and precision.

Printing by means of multi-photon polymerization is not further limited according to the present invention and may involve techniques such as two-photon absorption or other higher-order multi-photon absorption processes. The wavelengths of the light used for these processes can be either the same or different, depending on the specific photoinitiator and the desired absorption characteristics. Using light having the same wavelength simplifies the setup and can ensure consistent activation of the photoinitiator across different polymerization stages. Alternatively, light having different wavelengths may be used to selectively target various photoinitiators or control polymerization depth and resolution. This flexibility in wavelength choice allows for precise tailoring of the printing process to achieve the optimal resolution, structural integrity, and depth control required for complex three-dimensional structures.

Printing by means of multi-photon polymerization can be achieved either sequentially in layers or simultaneously across multiple regions, depending on the desired structure and complexity of the three-dimensional model. Sequential layer-by-layer printing allows precise control over each layer's features and resolution, making it well-suited for structures requiring high detail and intricate geometries. Alternatively, simultaneous multi-region polymerization can be used to accelerate the printing process, enabling larger or more uniform structures to be produced in shorter time frames. This flexibility in printing provides adaptability for various applications, whether they demand high precision or increased throughput.

The printing time by means of multi-photon polymerization is preferably equal to or less than five hours, more preferably equal to or less than three hours, and most preferably equal to or less than two hours, e.g., one hour or less, depending on the three-dimensional structure to be printed. Sequential layer-by-layer printing is typically at the upper limits of these printing times due to the meticulous control over each layer, which is decisive for applications requiring high resolution. In contrast, simultaneous multi-region polymerization can be accomplished within minutes, optimizing production speed for applications where throughput is prioritized.

Preferably, the multi-photon polymerization in step B) is at least one selected from the group consisting of direct laser writing (DLW), voxel-based lithography, holographic lithography, and STED (stimulated emission depletion) lithography. Direct laser writing provides precise control over the polymerization process by focusing a laser to selectively activate the photoinitiator within the photopolymerizable composition, making it ideal for producing intricate and high-resolution structures. Voxel-based lithography allows manipulation at the microscale level by controlling individual "voxels" (three-dimensional pixels), enabling the creation of complex geometries with superior accuracy. Holographic lithography, on the other hand, employs interference patterns from multiple laser beams to form complex 3D structures in a single exposure, facilitating rapid fabrication of detailed features. STED lithography further enhances resolution by controlling fluorescence depletion around the focal point, allowing the creation of features below the diffraction limit. By selecting one or more of these multi-photon polymerization techniques, the production method according to the present invention can achieve high spatial resolution, which is crucial for producing finely detailed 3D structures with tailored mechanical properties. This versatility makes the process adaptable for a wide range of applications requiring high precision and durability in three-dimensional printing.

Preferably, the multi-photon polymerization in step B) is two-photon polymerization. Two-photon polymerization offers distinct advantages for high-resolution structuring, as it allows precise activation of the photoinitiator within a confined focal volume, minimizing unintended polymerization outside the targeted region. This selective activation results in exceptionally fine spatial resolution, enabling the production of intricate and complex 3D structures. Two-photon polymerization is especially suitable for creating features in the (sub-)micrometer range due to its ability to control depth and lateral dimensions accurately. This technique not only enhances the precision and detail of the printed structure but also contributes to the mechanical stability and integrity of the final product, making it an ideal choice for applications that require highly detailed and durable three-dimensional materials.

Typically, for excitation of the photoinitiator, a laser is used as the excitation unit. Thus, the multi-photon polymerization in step B) is also referred to as 3D laser printing. Since multi-photon polymerization is a non-linear process, it is preferred to use a pulsed laser as it can provide for the high optical intensities needed. Particularly preferred is a femtosecond-pulsed laser as its extremely short pulse durations minimize thermal effects and enhance spatial precision, enabling the fabrication of highly intricate and well-defined three-dimensional structures.

As required, the production method according to the present invention may include additional steps, such as transferring the photopolymerizable composition provided in step A) into a reaction vessel for polymerization in step B), and/or heating the photopolymerizable composition to a predetermined temperature to initiate or support the polymerization process. Additionally, mixing the photopolymerizable composition to ensure a homogeneous distribution of all components before and during polymerization, adjusting the reaction atmosphere by introducing an inert gas to prevent unwanted side reactions, and performing thermal post-curing of the three-dimensional structure to enhance stability as well as the mechanical properties may also be included. Further steps can involve washing the three-dimensional structure to remove unreacted materials and residues, drying the structure after washing to remove any solvents or moisture, and inspecting the final structure to verify conformity with dimensional and structural specifications.

As a further example of an additional step, ions present in the printed structures can be effectively removed in the method of producing a three-dimensional structure. Treatment with solvents such as isopropanol and water may be applied to break supramolecular ion-dipole and hydrogen bonds, effectively removing ions from the printed three-dimensional structure. To further improve the removal of ions, a subsequent development step employing a chelating ligand solution, such as ethylenediaminetetraacetic acid (EDTA), can be applied. While ions derived from the Lewis acid are essential at the stage of printing, they are desirably removed from the printed three-dimensional structure to enhance the final properties thereof.

The method of producing a three-dimensional structure according to the present invention allows for printing three-dimensional structures with resolution in the (sub-) micrometer range, using a photopolymerizable composition in a controlled multi-photon polymerization process. The production method according to the present invention yields a precise, high-resolution three-dimensional structure with improved mechanical stability and application-specific adaptability, making it ideal for high-performance applications in fields such as biomedicine, electronics, and advanced manufacturing.

### The Figures show

**Figure 1** shows the schematic coordination of zinc chloride to 2-hydroxyethyl acrylate in the photopolymerizable composition prepared in Working Example 1 described hereinbelow.
**Figure 2** shows scanning electron microscopic images of the three-dimensional structures obtained in Working Example 1 described hereinbelow.
**Figure 3** shows scanning electron microscopic images of the three-dimensional structures obtained in Working Example 2 described hereinbelow.

### Examples

The present invention is further illustrated by the following Working Examples but is not to be construed as being limited thereto.

### Working Example 1

A photopolymerizable composition comprising the components listed in Table 1 below was prepared:

**Table 1**

| **Working Example 1 - Photopolymerizable composition** | **Mass ratio [%]** |
|---|---|
| zinc chloride | 47.5 |
| 2-hydroxyethyl acrylate | 47.5 |
| polyethylene glycol diacrylate Mn 700* | 4.0 |
| 4,4'-bis(diethylamino)benzophenone | 1.0 |

| | |
|---|---|
| * number average molecular weight confirmed by ¹H-NMR spectroscopy | |

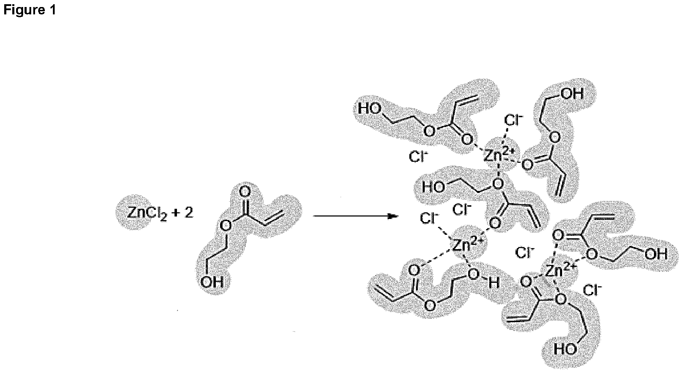

For preparing the photopolymerizable composition, zinc chloride was first mixed with 2-hydroxyethyl acrylate and stirred at 90 °C and 600 rpm for 30 min. The other ink components were added subsequently to the mixture at 50 °C and 900 rpm. The schematic coordination of zinc chloride to 2-hydroxyethyl acrylate in the photopolymerizable composition thus prepared is shown in **Figure 1****.**

Multi-photon 3D laser printing was performed using a commercially available 3D printing system ("Photonic Professional GT2", Nanoscribe GmbH & Co. KG) equipped with a femtosecond-pulsed laser (center wavelength: 780 nm; peak power: 25 kW; pulse duration: 80-100 fs; and repetition rate: 80 MHz) at a laser power of 50 mW and a scanning speed of 50 mm/s. For multi-photon 3D laser printing, a 10× objective (numerical aperture: 0.3) was used.

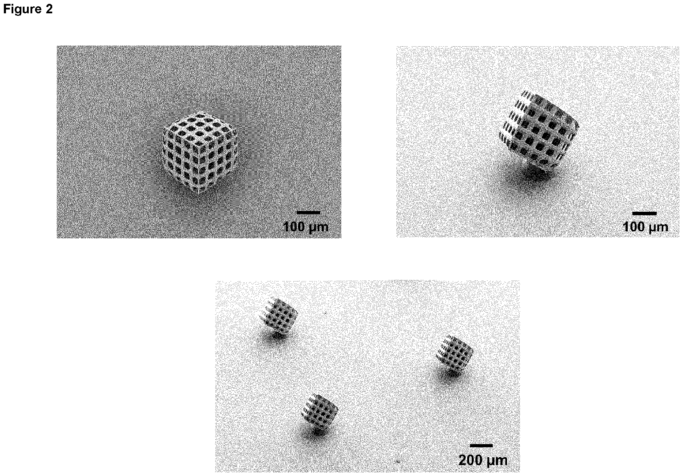

Scanning electron microscopic images of the three-dimensional structures thus obtained are shown in **Figure 2** (top left side: single multi-photon 3D laser printed cubic lattice in top view; top right side: single multi-photon 3D laser printed cubic lattice in side view; and bottom side: plurality of multi-photon 3D laser printed cubic lattices in side view). The images were acquired using a commercially available scanning electron microscope ("Zeiss SUPRA 55VP", Carl Zeiss AG) at an accelerating voltage of 3-5 kV in secondary electron mode. Prior to imaging, the structures were sputter-coated with a Pt-Pd layer having a thickness of 12 nm. The structures were imaged in top view or in side view (angle: 40°).

### Working Example 2

A photopolymerizable composition comprising the components listed in Table 2 below was prepared:

**Table 2**

| **Working Example 2 - Photopolymerizable composition** | **Mass ratio [%]** |
|---|---|
| zinc chloride | 23.75 |
| 2-hydroxyethyl acrylate | 23.75 |
| acrylamide | 47.5 |
| polyethylene glycol diacrylate Mn 700* | 4.0 |
| 4,4'-bis(diethylamino)benzophenone | 1.0 |

| | |
|---|---|
| * number average molecular weight confirmed by ¹H-NMR spectroscopy | |

The photopolymerizable composition was prepared and multi-photon 3D laser printing was performed in the same manner as described above in connection with Working Example 1.

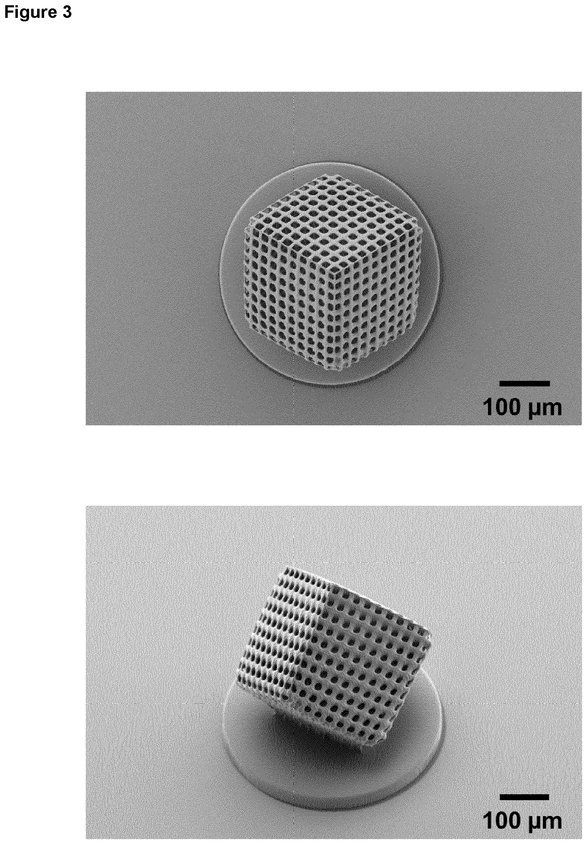

Scanning electron microscopic images of the three-dimensional structures thus obtained are shown in **Figure 3** (top side: single multi-photon 3D laser printed cubic lattice in top view; and bottom side: single multi-photon 3D laser printed cubic lattice in side view). The images were acquired in the same manner as described above in connection with Working Example 1.

## Claims

1. A method of producing a three-dimensional structure, the method comprising the following steps:
A) providing a photopolymerizable composition comprising a photopolymerizable monomer, a Lewis acid, a photoinitiator, and an optional additive; and
B) printing the three-dimensional structure by means of multi-photon polymerization of the photopolymerizable composition provided in step A).

2. The production method according to claim 1, wherein the photopolymerizable composition does not include water.

3. The production method according to claim 1 or 2, wherein the photopolymerizable monomer is at least one selected from the group consisting of acrylic acid, 2-hydroxyethyl acrylate, acrylamide, N,N-dimethylacrylamide, N-isopropylacrylamide, and N,N'-bis(acryloyl)cystamine.

4. The production method according to any one of claims 1 to 3, wherein the Lewis acid is at least one selected from the group consisting of ZnCl₂, FeCl₃, and AlCl₃.

5. The production method according to any one of claims 1 to 4, wherein the photoinitiator is at least one selected from the group consisting of phenylbis(2,4,6-trimethylbenzoyl)phosphine oxide, diphenyl(2,4,6-trimethylbenzoyl)phosphine oxide, ethyl phenyl(2,4,6-trimethylbenzoyl)phosphinate, 2-hydroxy-2-methylpropiophenone, 1-hydroxycyclohexyl phenyl ketone, and 4,4'-bis(diethylamino)benzophenone.

6. The production method according to any one of claims 1 to 5, wherein step A) comprises the following steps:
A1) mixing the photopolymerizable monomer with the Lewis acid and heating the obtained mixture; and
A2) adding the photoinitiator and the optional additive.

7. The production method according to claim 6, wherein heating in step A1) is carried out at a temperature in the range from 50 to 150 °C for a period in the range from 5 to 300 min.

8. The production method according to any one of claims 1 to 7, wherein the photopolymerizable composition provided in step A) comprises the additive, wherein the additive is at least one selected from the group consisting of a crosslinker, a plasticizer, a stabilizer, a colorant, a photosensitizer, an antioxidant, a chain transfer agent, a viscosity modifier, and a dispersing agent.

9. The production method according to any one of claims 1 to 8, wherein the molar ratio of the Lewis acid and the photopolymerizable monomer, represented as molar amount of the Lewis acid : molar amount of the photopolymerizable monomer, is 1 : 0.5 to 10.

10. The production method according to any one of claims 1 to 9, wherein the molar ratio of the Lewis acid and the photoinitiator, represented as molar amount of the Lewis acid : molar amount of the photoinitiator, is 1: 0.001 to 0.2.

11. The production method according to any one of claims 1 to 10, wherein the wavelength for multi-photon polymerization in step B) is in the range from 400 to 1200 nm.

12. The production method according to any one of claims 1 to 11, wherein the multi-photon polymerization in step B) is at least one selected from the group consisting of direct laser writing, voxel-based lithography, holographic lithography, and STED lithography.

13. The production method according to any one of claims 1 to 12, wherein the multi-photon polymerization in step B) is two-photon polymerization.
